# EUROPEAN PATENT APPLICATION

(11) **EP 3 862 964 A1**
(43) Date of publication of application: **11.08.2021**
(21) Application number: 19869503.3
(22) Date of filing: 02.10.2019
(51) Int. Cl.: G06Q 50/10, G06F 3/0488, G06Q 30/06, G06Q 50/18

(54) **VIRTUAL REALITY GALLERY SYSTEM AND METHOD FOR PROVIDING VIRTUAL REALITY GALLERY SERVICE**

(30) Priority: 02.10.2018 KR 20180117598; 06.12.2018 KR 20180155866
(71) Applicant: Gallery360, Inc., Paju-si, Gyeonggi-do 10908 (KR)
(72) Inventor: SHIN, Hyo Mi, Paju-si, Gyeonggi-do 10908 (KR)
(74) Representative: Capasso, Olga
(86) International application number: PCT/KR2019/012909
(87) International publication number: WO 2020/071785

(57) **Abstract**

According to the present invention, disclosed are a virtual reality gallery system and a method for providing a virtual reality gallery service, the VR gallery service providing server includes a processor configured to control work upload data including at least one original image to be received from the first user terminal and a virtual reality (VR) gallery for online viewing of the original image to be generated using the work upload data. such that a user may view works in virtual reality.

## Description

### [Technical Field]

The present invention relates to a gallery system and a gallery service providing method thereof, and more particularly, to a virtual reality gallery system and a virtual reality gallery service providing method which allow a user to view, sell, and buy art works based on virtual reality.

### [Background Art]

Generally, an exhibition hall or a gallery refers to an offline space that displays works of art, such as art, craft, photography, and sculpture, produced by artists such as painters, craftsmen, photographers, and sculptors. The exhibition hall is not only a location for viewing the exhibited works, but also a location where the exhibited works are sold or bought. That is, general users directly visit the exhibition hall to view works of favorite artists or directly buy favorite works.

However, a user who wants to buy an art work needs to directly visit the corresponding exhibition hall and view the art work to buy the corresponding art work. In order to solve this inconvenience, there may be a method using Internet. That is, a virtual exhibition hall is installed on the Internet to allow Internet users to view the art works through their own terminals and buy the art works.

In Korean Unexamined Patent Application Publication No. 10-2002-0080165, "virtual art gallery system using Internet, virtual art exhibiting, selling method thereof, computer readable recording medium stored computer program for performing the method" is disclosed. According to the prior art, an online virtual gallery system which exhibits art works on the Internet is implemented to provide a service which allows artists who do not form public awareness to open online virtual exhibition and allows online viewers to view the art works.

In the meantime, art works purchased by a general user are generally purchased to be disposed at home or an office of the user to view the art work. However, when the corresponding user wants to purchase an arbitrary art work through the Internet, the user purchases the art work by figuring out whether the art work nicely matches the home or office only depending on the feeling.

### [Disclosure]

### [Technical Problem]

Accordingly, an object to be achieved by the present invention is to provide a gallery system which allows the work to be viewed on the virtual reality.

Another object to be achieved by the present invention is to provide a gallery management method using the gallery system.

Other and further objects of the present invention which are not specifically described can be further considered within the scope easily deduced from the following detailed description and the effect.

### [Technical Solution]

In order to solve the above-described problems, a virtual reality gallery system according to an exemplary embodiment of the present invention includes a first user terminal; and a VR gallery service providing server includes a processor configured to control work upload data including at least one original image to be received from the first user terminal and a virtual reality (VR) gallery for online viewing of the original image to be generated using the work upload data.

Here, the VR gallery service providing server includes: a VR gallery generation module which receives work upload data including at least one original image from the first user terminal to generate a virtual reality (VR) gallery for online viewing of the original image using work contents included in the work upload data and a space image selected as a space desired by a user to exhibit the work corresponding to the original image and store and manage the generated VR gallery as a registered gallery; and a VR gallery execution module which selects any one VR gallery which is stored as the registered gallery to be managed as a selected gallery to transmit the selected gallery to a second user terminal.

Here, the VR gallery generation module includes: a gallery generating unit which generates a virtual reality (VR) gallery for online viewing of the original image using the work upload data; and a gallery registering unit which stores the VR gallery as a registered gallery to be managed.

Here, the VR gallery execution module includes a gallery executing unit which selects any one VR gallery which is stored as the registered gallery to be managed as a selected gallery to transmit the selected gallery to a second user terminal; and a work purchasing unit which receives work purchase information to buy a selected work which is at least one work included in the selected gallery from the second user terminal and performs a purchase process of the selected work in accordance with the work purchase information.

Here, the work upload data includes one or more selected from a group consisting of work bibliographic information including an artist name of the original image, work explanation information for explaining the original image, right holder information including an owner of the original image, and purchase price information including a purchase price for the original image.

Here, the work explanation information includes one or more selected from a group consisting of explanation text information, explanation audio file, and explanation video file information.

Here, the gallery generating unit further receives gallery setting information about the VR gallery from the first user terminal and generates the VR gallery using the work upload data and the gallery setting information and the gallery setting information includes template selection information for determining at least one of gallery templates to determine a gallery style.

Here, the gallery setting information further includes work position setting information for determining a position to dispose the original image, among a plurality of placement information in the gallery template selected by the template selection information and gallery explanation information for explaining the VR gallery.

Here, the gallery executing unit transmits a gallery list for at least one gallery included in the registered gallery to the second user terminal, receives information about the selected gallery from the second user terminal, and transmits the selected gallery to the second user terminal to display the selected gallery. Here, the selected gallery is a VR gallery selected from the gallery list by the second user terminal.

Here, the VR gallery service providing server further includes: a work production progress module which receives a work production request from the third user terminal which requests the production of the work to perform a work production process.

Here, the work production progress module includes: a production request receiving unit which receives a production request case from the third user terminal; a production request registering unit which stores and manages at least one production request registration case including the production request case; a production matching unit which transmits a production request list in accordance with the production request registration case to at least one of a plurality of registered user terminals, receives production request acceptance information including information about at least one production request acceptance case selected in the production request list from at least one fourth user terminal which accepts the production request, among the plurality of user terminals, and performs a production matching process using the production request acceptance information; and a production progressing unit which progresses the work production process for a production request case matched by the production matching process.

Here, the production matching unit generates an accepted artist list according to the accepted artist terminal to transmit the list to the third user terminal, receives artist selection information including information about an matching artist who is an artist selected in the acceptance artist list from the third user terminal, and transmits a production matching completion message informing that the production matching is completed, to the third user terminal and a terminal of the matching artist using the artist selection information.

Here, the production request acceptance information further includes artist suggestion information including suggestion for at least one work production other than the production request corresponding to the production request acceptance case and the artist selection information further includes the production request corresponding to the production request acceptance case and production information selected among the suggestion for the work production.

A virtual reality gallery service providing method according to an exemplary embodiment of the present invention includes receiving work upload data including at least one original image from a first user terminal, by a VR gallery service providing server; generating a virtual reality (VR) gallery for online viewing of the original image using work contents included in the work upload data and a space image selected as a space desired by a user to exhibit a work corresponding to the original image; and storing and managing the VR gallery as a registered gallery.

Here, the virtual reality gallery service providing method further includes: selecting any one VR gallery which is stored as the registered gallery to be managed as a selected gallery to transmit the selected gallery to a second user terminal, by the VR gallery service providing server; and receiving work purchase information to buy a selected work which is at least one work included in the selected gallery from the second user terminal and performing a purchase process of the selected work in accordance with the work purchase information.

Here, the generating of a virtual reality (VR) gallery for online viewing of the original image using the work upload data is receiving gallery setting information for the VR gallery from the first user terminal and generating the VR gallery using the work upload data and the gallery setting information.

Here, the selecting of the VR gallery as a selected gallery to transmit to the second user terminal is transmitting a gallery list for at least one gallery included in the registered gallery to the second user terminal, receiving information about the selected gallery from the second user terminal, and transmitting the selected gallery to the second user terminal to be displayed.

Here, the method further includes receiving a work production request from a third user terminal which requests the production of a work to perform a work production process, by the VR gallery service providing server.

### [Advantageous Effects]

As described above, according to exemplary embodiments of the present invention, when a user who wants to exhibit works possessed by the user uploads an original image of the work to a gallery system, the gallery system generates a VR gallery to allow the uploaded original image of the work to be viewed in a virtual reality space so that a viewer who wants to view the work accesses the gallery system using his/her own user terminal to view the corresponding work with a sense of realism by means of the VR gallery as if the viewer views the work at the actual gallery and may be connected to buy the work thereafter.

Further, when a user who wants to request the production of a work uploads information about the work which is wanted to be produced in the gallery system, the gallery system contacts an artist who can produce the requested work to automatically match them so that the user may easily request the production of the work. Further, an artist who is registered in the gallery system may more easily match the work production requester to perform the work production.

Further, when a user who wants to request the purchase of a work uploads information about a purchase requested work in the gallery system, the gallery system contacts a conservator who can sell the corresponding requested work, for example, an owner or a curator, to automatically match them so that the user may easily request the purchase of the work. Further, the conservator registered in the gallery system may more easily match the purchase place of the corresponding work to sell the work.

Even if the effects are not explicitly mentioned here, the effects described in the following specification which are expected by the technical features of the present disclosure and their potential effects are handled as described in the specification of the present disclosure.

### [Brief Description of Drawings]

FIG. 1 is a conceptual diagram illustrating a virtual reality gallery system according to an exemplary embodiment of the present invention.
FIG. 2 is a block diagram illustrating a virtual reality gallery system according to an exemplary embodiment of the present invention.
FIG. 3 is a block diagram illustrating a VR gallery generation module and a VR gallery execution module of a virtual reality gallery system according to an exemplary embodiment of the present invention.
FIG. 4 is a flowchart for explaining a virtual reality gallery service providing method according to a VR gallery generation module and a VR gallery execution module according to an exemplary embodiment of the present invention.
FIG. 5 is a view for explaining work upload data and gallery setting information of a virtual reality gallery system according to an exemplary embodiment of the present invention.
FIG. 6 is a screen illustrating an example of a log-in process of a virtual reality gallery system according to an exemplary embodiment of the present invention.
FIG. 7 is a screen illustrating an example of a process of selecting a gallery template of a virtual reality gallery system according to an exemplary embodiment of the present invention.
FIG. 8 is a screen illustrating an example of a process of setting a position of a work of a virtual reality gallery system according to an exemplary embodiment of the present invention.
FIG. 9 is a screen illustrating an example of a process of inputting explanation for a VR gallery of a virtual reality gallery system according to an exemplary embodiment of the present invention.
FIG. 10 is a screen illustrating an example of a VR gallery of a virtual reality gallery system according to an exemplary embodiment of the present invention.
FIG. 11 is a block diagram illustrating a work production progress module of a virtual reality gallery system according to an exemplary embodiment of the present invention.
FIG. 12 is a flowchart for explaining a virtual reality gallery service providing method according to a work production progress module according to an exemplary embodiment of the present invention.
FIG. 13 is a screen illustrating an example of a work production progress process of a virtual reality gallery system according to an exemplary embodiment of the present invention.
FIG. 14 is a block diagram illustrating a work purchase progress module of a virtual reality gallery system according to an exemplary embodiment of the present invention.
FIG. 15 is a flowchart for explaining a virtual reality gallery service providing method according to a work purchase progress module according to an exemplary embodiment of the present invention.
FIG. 16 is a screen illustrating an example of a process of selecting a gallery template of a virtual reality gallery system according to an exemplary embodiment of the present invention.
FIG. 17 is a screen illustrating an example of a process of setting a position of a work of a virtual reality gallery system according to an exemplary embodiment of the present invention.
FIG. 18 is a screen illustrating an example of a state in which a work of a virtual reality gallery system according to an exemplary embodiment of the present invention is disposed in a set position.
FIG. 19 is a screen illustrating an example of a process of selecting gallery background music to be used for a gallery template of a virtual reality gallery system according to an exemplary embodiment of the present invention.
FIG. 20 is a screen illustrating an example of a process of completing a setting of a gallery template of a virtual reality gallery system according to an exemplary embodiment of the present invention.
FIG. 21 is a screen illustrating an example of a process of inputting explanation for a VR gallery of a virtual reality gallery system according to an exemplary embodiment of the present invention.
FIG. 22 is a screen illustrating another example of a process of setting a position of a work in a gallery template of a virtual reality gallery system according to another exemplary embodiment of the present invention.

### [Best Mode]

Hereinafter, a virtual reality gallery system and a virtual reality gallery service providing method related to the present invention will be described in more detail with reference to the drawings. However, the present invention can be realized in various different forms, and is not limited to the exemplary embodiments described herein. In order to clearly describe the present invention, a part which may obscure the present invention may be omitted and like reference numerals denote like components.

It should be understood that, when it is described that an element is "coupled" or "connected" to another element, the element may be directly coupled or directly connected to the other element or coupled or connected to the other element through a third element.

Further, such as "module" and a "unit", suffixes for components used in the following description are given or mixed and used by considering easiness in preparing a specification and do not have a meaning or role distinguished from each other in themselves.

Terms such as first or second may be used to describe various components but the components are not limited by the above terms. The above terms are used only to discriminate one component from the other component.

The present invention relates to a virtual reality gallery system and a virtual reality gallery service providing method.

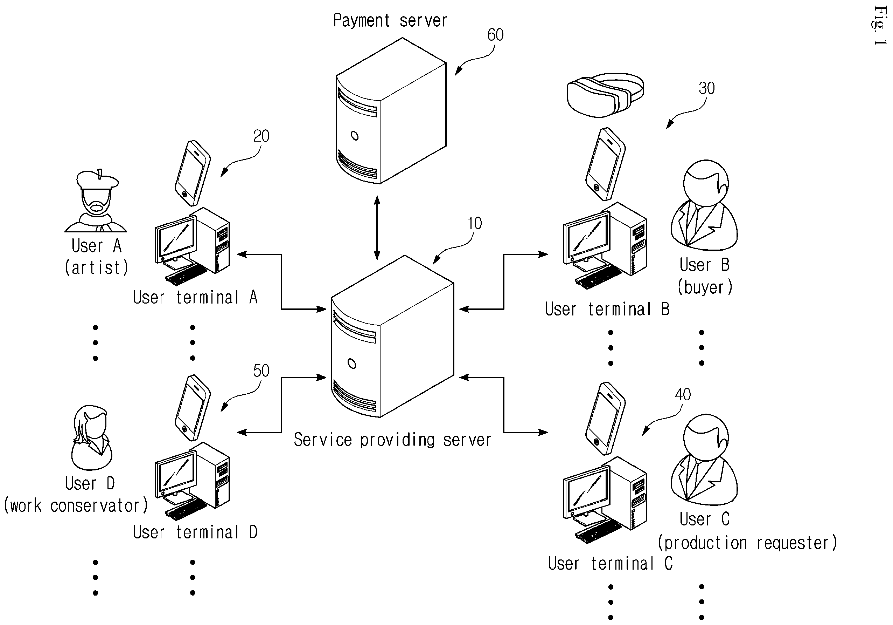

FIG. 1 is a conceptual diagram illustrating a virtual reality gallery system according to an exemplary embodiment of the present invention.

Referring to FIG. 1, a virtual reality gallery system according to an exemplary embodiment of the present invention includes a VR gallery service providing server 10, a plurality of user terminals 20, 30, 40, and 50, and a payment server 60.

The virtual reality gallery system according to the exemplary embodiment of the present invention may be a server system which provides a VR gallery service to user terminals 20, 30, 40, and 50 which are owned by a plurality of users accessing through a wired/wireless network, for example, Internet and performs a payment service with an arbitrary payment server 60 which is connected through the wired/wireless network. At this time, the VR gallery service may be a service which relays the exhibition, viewing, production, purchase, and selling of art works such as arts, crafts, photography, and sculptures.

According to the exemplary embodiment of the present invention, the users may include at least one artist who possesses his/her own work or products a requested work, at least one buyer who views and buys the work, at least one production requester who requests the production of a work, and a work conservator who has a right to sell the possessed work.

In FIG. 1, a user terminal possessed by the artist is referred to as a user terminal A 20, a user terminal possessed by the buyer is referred to as a terminal B 30, a user terminal possessed by the production requester is referred to as a user terminal C 40, and a user terminal possessed by the work conservator is referred to as a user terminal D 50. Further, in the below description, first to sixth user terminals do not limit the owners of the terminals, but distinguish the user terminals.

Here, the user terminals 20, 30, 40, and 50 may be a general computer system, a smart terminal such as a smart phone or a tablet PC, or a head mounted display (HMD) device which implements virtual reality. Specifically, a user who wants to view a virtual reality gallery by accessing the VR gallery service providing server wears the HMD device to easily view the works. For example, the user terminal B 20 may be a head mounted display (HMD) device.

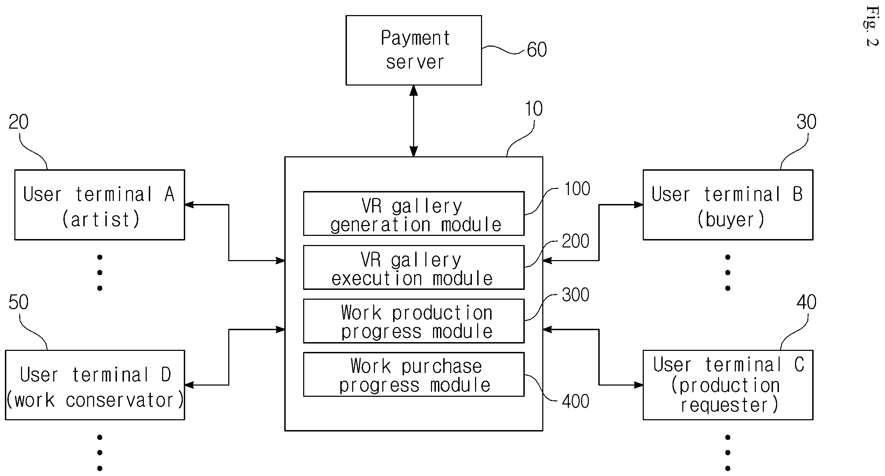

FIG. 2 is a block diagram illustrating a virtual reality gallery system according to an exemplary embodiment of the present invention.

Referring to FIG. 2, a virtual reality gallery system according to an exemplary embodiment of the present invention includes a VR gallery service providing server 10, a plurality of user terminals 20, 30, 40, and 50, and a payment server 60.

Further, the VR gallery service providing server 10 includes a VR gallery generation module 100, a VR gallery execution module 200, a work production progress module 300, and a work purchase progress module 400. Here, the VR gallery generation module 100, the VR gallery execution module 200, the work production progress module 300, and work purchase progress module 400 may be a plurality of computer systems which is physically divided, a plurality of programs which is executed in a single computer system, or a plurality of programs which is executed in a plurality of computer systems.

The VR gallery service providing server 10 incudes a processor configured to control work upload data including at least one original image to be received from the first user terminal 20 and a virtual reality (VR) gallery for online viewing of the original image to be generated using the work upload data.

Here, the first user terminal 20 may be a user terminal A 20 which is possessed by the artist.

The VR gallery generation module 100 receives work upload data including at least one original image from the first user terminal to generate a virtual reality (VR) gallery for online viewing of the original image using work contents included in the work upload data and a space image selected by the user as a space to display the work corresponding to the original image and store and manage the generated VR gallery as a registered gallery.

The VR gallery execution module 200 selects any one VR gallery which is stored and managed as the registered gallery as a selected gallery to transmit the selected gallery to the second user terminal 30.

Here, the second user terminal 30 may be a user terminal B 30 which is possessed by the buyer.

The work production progress module 300 receives a work production request from the third user terminal which requests the production of the work to perform a work production process.

Here, the third user terminal 40 may be a user terminal C 40 which is possessed by the production requester.

The work purchase progress module 400 receives a work purchase request from the fifth user terminal which requests the purchase of the work to perform a work production process.

Here, the fifth user terminal 50 may be a user terminal D 50 which is possessed by the work conservator.

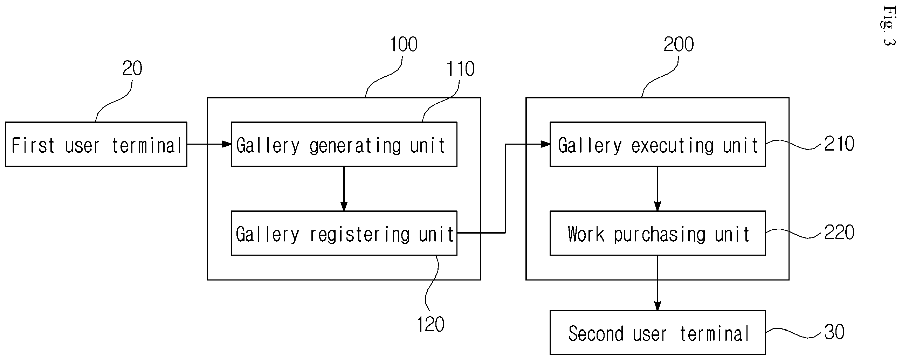

FIG. 3 is a block diagram illustrating a VR gallery generation module and a VR gallery execution module of a virtual reality gallery system according to an exemplary embodiment of the present invention.

Referring to FIG. 3, the VR gallery generation module 100 includes a gallery generating unit 110 and a gallery registering unit 120.

The gallery generating unit 110 generates a virtual reality (VR) gallery for online viewing of the original image using the work upload data.

According to the present invention, while displaying a three-dimensional image of a space image selected as a space desired by a user to exhibit the works through the head mounted display (HMD) based virtual reality (VR) device, a VR gallery which is generated by combining work contents included in work upload data is interlinked to be displayed on the screen through a communication terminal connected to the VR device, such as a smart phone.

Specifically, the gallery generating unit 110 further receives gallery setting information about the VR gallery from the first user terminal and generates the VR gallery using the work upload data and the gallery setting information. Here, the gallery setting information includes template selection information for determining at least one of gallery templates to determine a gallery style. Further, the gallery setting information further includes work position setting information for determining a position to dispose the original image, among a plurality of placement positions in the gallery template selected by the template selection information and gallery explanation information for explaining the VR gallery.

Here, the VR gallery generated by the gallery generating unit 110 is a stereoscopic image for left and right eyes and is generated by an image signal reproduced in the communication terminal by referring to user vision information including a position of eyes, an eye direction, and focal point information in accordance with up, down, left, and right rotation of the user identified based on a sensing signal input from any one of a position sensor, a gyro sensor, and an acceleration sensor equipped in the VR device or a combination thereof. Specifically, the gallery generating unit 110 may include a work content identifying unit which identifies work contents included in the received work upload data and an image processing unit which interlinks the work contents with the stereoscopic image of the space image of a display space desired by the user to output together.

During the image outputting process, the VR device which identifies work contents included in the received work upload data generates the VR gallery by overlaying the work contents on the stereoscopic image signals for the left eye and the right eye, of the space image which is selected as a displaying space desired by the user and is being reproduced.

Further, the VR device may further include an input manipulating unit which generates a key signal in accordance with manipulation of the user to set a function or a configuration of the VR device.

The gallery registering unit 120 stores and manages the VR gallery as a registered gallery.

The VR gallery execution module 200 includes a gallery executing unit 210 and a work purchasing unit 220.

The gallery executing unit 210 selects any one VR gallery which is stored and managed as the registered gallery, as a selected gallery, to transmit the selected gallery to the second user terminal 30.

Specifically, the gallery executing unit 210 transmits a gallery list for at least one gallery included in the registered gallery to the second user terminal, receives information about the selected gallery from the second user terminal, and transmits the selected gallery to the second user terminal to display the selected gallery. Here, the selected gallery is a VR gallery selected from the gallery list by the second user terminal.

The work purchasing unit 220 receives work purchase information to buy a selected work which is at least one work included in the selected gallery from the second user terminal and performs a purchase process of the selected work in accordance with the work purchase information.

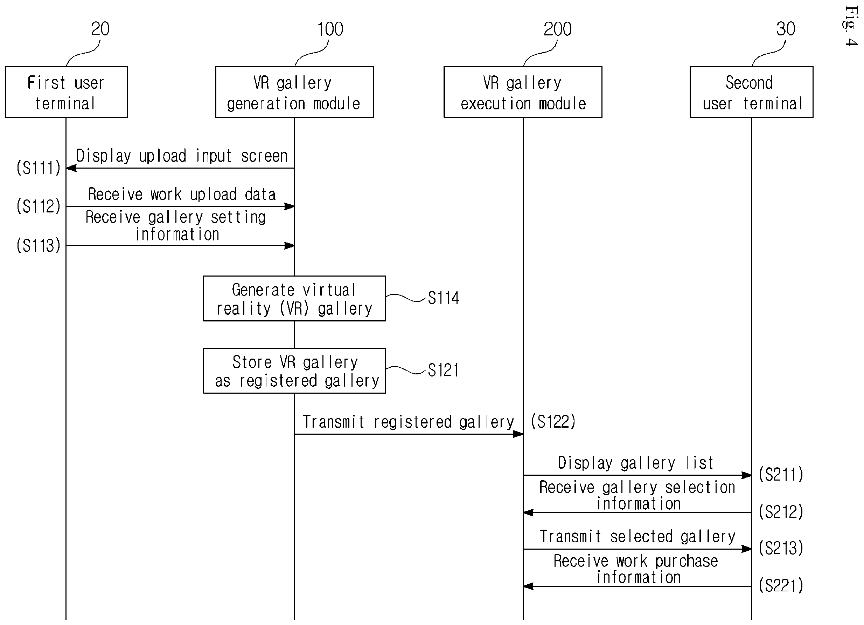

FIG. 4 is a flowchart for explaining a virtual reality gallery service providing method according to a VR gallery generation module and a VR gallery execution module according to an exemplary embodiment of the present invention.

First, when the first user terminal 20 accesses the VR gallery service providing server 10 to be logged-in, the VR gallery service providing server 10 begins a VR gallery service with the first user terminal 20 which is a gallery generating terminal. At this time, in the gallery generating terminal, a program for performing the VR gallery service, for example, an application program, needs to be downloaded to be installed in advance.

Next, the gallery generating unit 110 of the VR gallery generation module 100 receives work upload data including at least one original image from the gallery generating terminal. For example, in step Sill, when the first user terminal 20 displays an upload input screen provided by the gallery generating unit 110, in step S 112, the user may generate the work upload data through the upload input screen to transmit the work upload data to the gallery generating unit 110. Here, the original image may be a digital image for an artwork to be exhibited.

Next, the gallery generating unit 110 of the VR gallery generation module 100 generates a VR gallery A for online viewing of the original image using the work upload data.

Specifically, in step S 113, the gallery generating unit 110 may receive not only the work upload data, but also gallery setting information for the VR gallery A, from the gallery generating terminal. That is, the gallery generating terminal generates the gallery setting information by an input operation of the user to transmit the gallery setting information to the gallery generating unit 110.

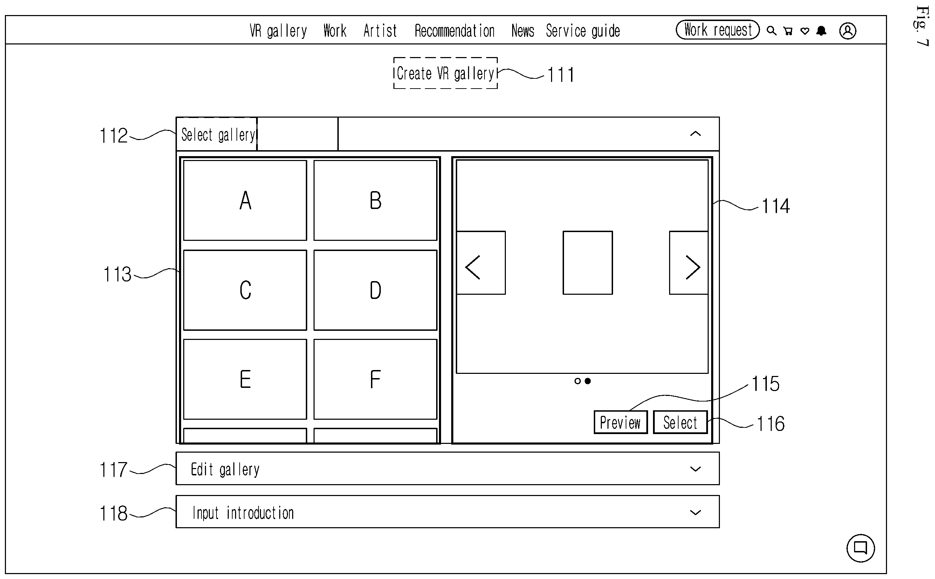

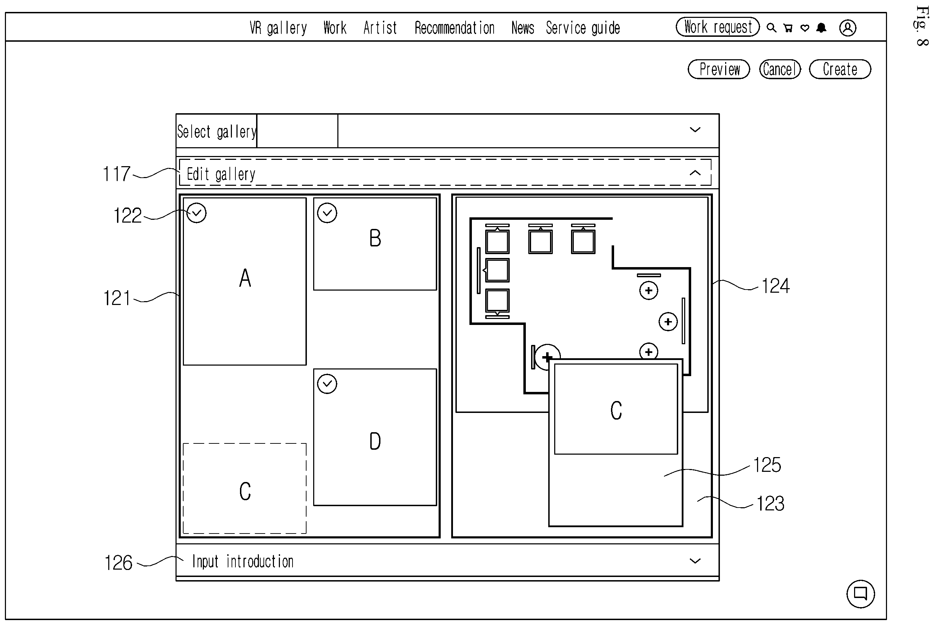

Specifically, for example, the gallery generating terminal may display a template selection screen as illustrated in FIG. 7, which is provided by the gallery generating unit 110. Next, the gallery generating terminal may display a work position setting screen as illustrated in FIG. 8, which is provided by the gallery generating unit 110.

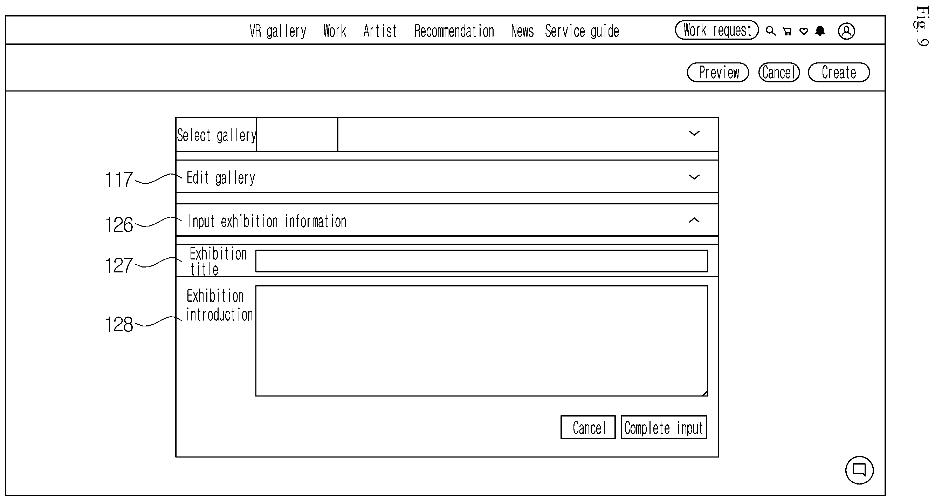

Next, when the gallery generating terminal displays a gallery explanation input screen as illustrated in FIG. 9, which is provided by the gallery generating unit 110, after the user inputs the gallery explanation information through the gallery explanation input screen, the gallery explanation information may be transmitted to the gallery generating unit 110.

In step S114, when the gallery generating unit 110 receives all the work upload data and the gallery setting information about the VR gallery A, the VR gallery A may be generated using the work upload data and the gallery setting information. In the meantime, the gallery generating unit 110 may automatically generate the VR gallery A without the gallery setting information. At this time, the setting information about the VR gallery A may be basic setting information and thereafter, the basic setting information may be changed by the same method as described above to be set.

For example, after identifying the work upload data and the gallery setting information, the gallery generating unit 110 generates the VR gallery A by generating a folder for every requested work, changing a size of an original image for every work in accordance with a corresponding work setting position, adding a shadow effect and an illumination effect for every work to automatically dispose in the virtual reality space, storing the explanation information for every work in the corresponding folder, and displaying an original view icon for every work, a work purchase icon, an audio/video/YouTube link icon, or an automatically generated gallery preview icon. Further, the gallery generating unit 110 converts the original image into a three-dimensional shape to dispose the converted shape in a virtual reality space.

As described above, when the gallery generating unit 110 generates the VR gallery A, in step S121, the gallery registering unit 120 of the VR gallery generation module 100 may store the VR gallery A to be registered. As a result, the gallery registering unit 120 may store a plurality of registered galleries including the VR gallery A.

Next, in step S122, the gallery executing unit 210 of the VR gallery execution module 200 selects any one VR gallery among the registered galleries as a selected gallery to transmit the selected gallery to the gallery execution terminal which is the second user terminal 30 to be displayed.

A process of transmitting the selected gallery will be described in detail. First, when the gallery executing terminal accesses the VR gallery service providing server 10 to be logged in, the VR gallery service providing server 10 may begin the VR gallery service with the gallery execution terminal which is the second user terminal 30. At this time, in the gallery executing terminal, a program for performing the VR gallery service, for example, an application program, needs to be downloaded to be installed in advance.

In step S211, when the user clicks a gallery view icon through the gallery executing terminal, the gallery executing unit 210 transmits and displays the gallery list for the registered galleries to the gallery executing terminal.

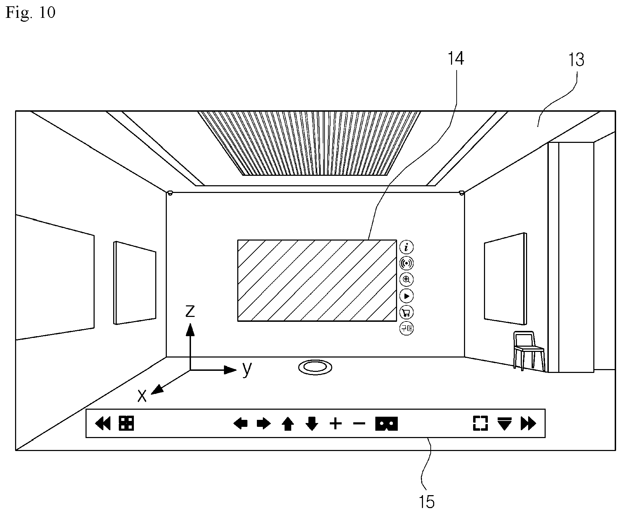

In step S212, when the gallery executing terminal selects any one VR gallery among the registered galleries by the input operation of the user to transmit the gallery selection information including the selected gallery to the gallery executing unit 210, in step S213, the gallery executing unit 210 transmits and displays the selected gallery to the gallery executing terminal. As a result, the gallery executing terminal displays the selected gallery in a three-dimensional space as illustrated in FIG. 10.

In step S221, the work purchasing unit 220 of the VR gallery execution module 200 receives work purchase information to purchase the selected work which is at least one work included in the selected gallery from the gallery executing terminal and performs a purchase process of the selected work in accordance with the work purchase information.

A process of purchasing the selected work will be described in detail. First, when the user clicks a purchase icon for the selected work while viewing the selected gallery through the gallery executing terminal, the work purchase information may be transmitted to the work purchasing unit 220. Next, the work purchasing unit 220 accesses the payment server 60 using payment information included in the work purchase information transmitted from the gallery executing terminal to progress the payment for the selected work. Next, the work purchasing unit 220 transmits a message informing that the payment for the selected work is completed to the gallery executing terminal and then performs a delivery process for the selected work.

In the present exemplary embodiment, the work purchase information may include ownership payment information for acquiring an ownership of the selected work and copyright payment information for acquiring a copyright of the selected work. That is, the user may make a payment for purchase price of the selected work to own the selected work or make a payment for a license fee of the copyright of the selected work to own only the copyright of the selected work. In the meantime, when a right holder of the selected work is changed, information about the right holder for the selected work may be automatically changed.

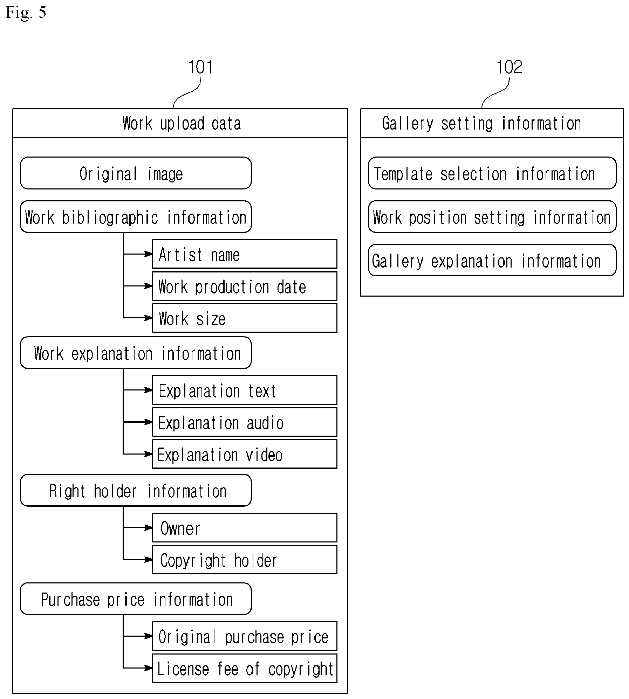

FIG. 5 is a view for explaining work upload data and gallery setting information of a virtual reality gallery system according to an exemplary embodiment of the present invention.

In the virtual reality gallery system according to an exemplary embodiment of the present invention, the work upload data 101 may further include work bibliographic information, work explanation information, right holder information, and purchase price information as well as the original image. The work bibliographic information may include an artist name of the original image, a work produced date, and a size of the work. The work explanation information may include at least one of explanation text information, an explanation audio file, and an explanation video file. The right holder information includes an owner and a copyright holder of the original work. Further, the purchase price information includes a purchase price of the original image and a license fee of the copyright.

In an exemplary embodiment of the present invention, the owner refers to a person who has a right to own the work corresponding to the original image and the copyright holder refers to a person who has a right to use the work corresponding to the original image for advertisement. Further, the purchase price refers to a cost required to acquire an ownership of the work corresponding to the original image and the license fee of the copyright refers to a cost paid to purchase the copyright for the work corresponding to the original image to use the work for the advertisement. In the meantime, when the owner includes the copyright holder, the copyright holder may be omitted and when the purchase price includes the license fee of the copyright, the license fee of the copyright may be omitted.

In the virtual reality gallery system according to the exemplary embodiment of the present invention, the gallery setting information 102 may include template selection information to determine at least one gallery template to determine a gallery style, work position setting information to determine a position to dispose the original image among a plurality of placement positions in the gallery template selected by the template selection information, and gallery explanation information for explaining the VR gallery A. At this time, the template selection information, the work position setting information, and the gallery explanation information may be sequentially input to be transmitted.

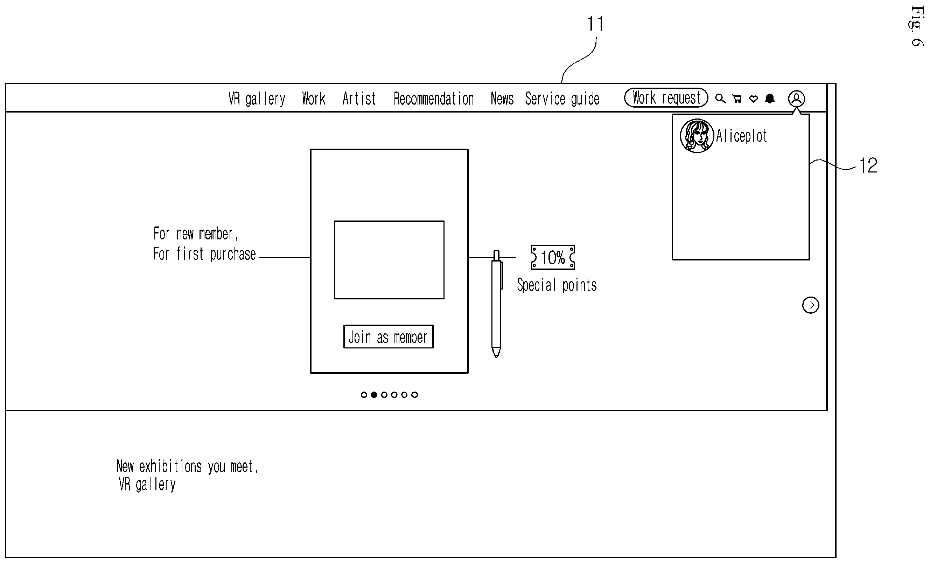

FIG. 6 is a screen illustrating an example of a log-in process of a virtual reality gallery system according to an exemplary embodiment of the present invention.

Referring to FIG. 6, when the gallery executing terminal accesses the VR gallery service providing server 10 to be logged in, account information 12 is displayed on a log-in screen 11. The VR gallery service providing server 10 may begin the VR gallery service with the gallery executing terminal which is the second user terminal 30. At this time, in the gallery executing terminal, a program for performing the VR gallery service, for example, an application program, needs to be downloaded to be installed in advance.

FIG. 7 is a screen illustrating an example of a process of selecting a gallery template of a virtual reality gallery system according to an exemplary embodiment of the present invention.

As illustrated in FIG. 7, in a VR gallery creating screen 111, the gallery generating terminal displays a template selection screen provided by the gallery generating unit 110, by means of the gallery selection 112 screen.

At this time, the template selection screen may include a template selection region 113 in which a plurality of gallery templates A, B, C and D which may be selected by the user is disposed in the form of a list, a template display region 114 in which a gallery template selected among the gallery templates displayed in the template selection region, a preview icon 115 which displays the gallery template displayed in the template display region by a three-dimensional virtual reality, and a selection icon 116 to select a gallery template displayed in the template display region.

Accordingly, when the user selects one of the gallery templates displayed in the template selection region, the corresponding gallery template may be identified by the template display region and then when the preview icon is clicked, the three-dimensional virtual reality of the corresponding gallery template may be identified in advance, and when the selection icon is clicked, the corresponding template may be selected. As a result, the gallery generating terminal may generate the template selection information to transmit the template selection information to the gallery generating unit 110.

Further, another function may also be performed by editing a gallery 117 and inputting an introduction text 118.

FIG. 8 is a screen illustrating an example of a process of setting a position of a work of a virtual reality gallery system according to an exemplary embodiment of the present invention.

As illustrated in FIG. 8, in a gallery editing mode 117, the gallery generating terminal may display the work position setting screen provided by the gallery generating unit 110. At this time, the work position setting screen 123 may include a work selection region 121 in which a plurality of work images included in the work upload data is displayed in the form of a list and one of the work images is selected by the user and a work placement region 124 in which the work image selected from the work selection region is disposed by selecting one of the plurality of placement positions of the gallery template selected by the template selecting information. Accordingly, after selecting one of work images displayed in the work selection region (122), the user selects one of the placement positions displayed in the work placement region to display so that all work images may be disposed in its positions. As a result, the gallery generating terminal may generate the work position setting information 125 to transmit the work position setting information to the gallery generating unit 110.

Further, another function may be performed by inputting exhibition information 126.

FIG. 9 is a screen illustrating an example of a process of inputting explanation for a VR gallery of a virtual reality gallery system according to an exemplary embodiment of the present invention.

As illustrated in FIG. 9, when the gallery generating terminal displays a gallery explanation input screen 126, which is provided by the gallery generating unit 112, after the user inputs the gallery explanation information through the gallery explanation input screen, the gallery explanation information may be transmitted to the gallery generating unit 112.

The gallery explanation information includes an exhibition title 127 and an exhibition introduction text 128.

FIG. 10 is a screen illustrating an example of a VR gallery of a virtual reality gallery system according to an exemplary embodiment of the present invention.

As illustrated in FIG. 10, when the gallery executing terminal selects any one VR gallery among the registered galleries by the input operation of the user to transmit the gallery selection information including the selected gallery to the gallery executing unit 122, the gallery executing unit 122 transmits and displays the selected gallery to the gallery executing terminal. As a result, the gallery executing terminal displays the selected gallery 14 in a three-dimensional space 13.

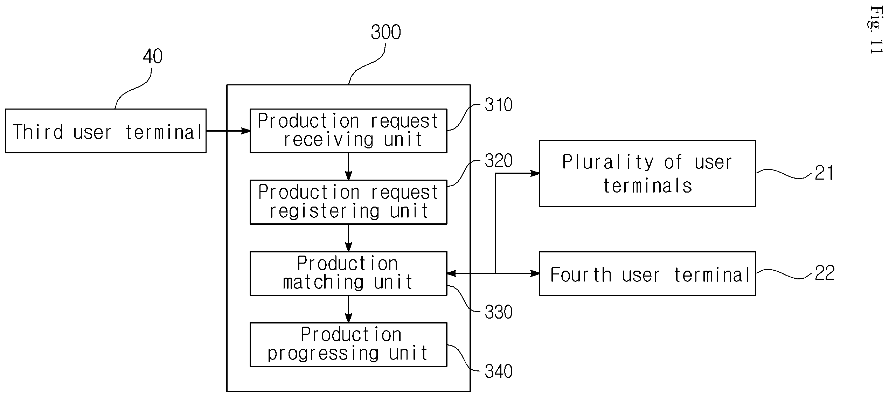

FIG. 11 is a block diagram illustrating a work production progress module of a virtual reality gallery system according to an exemplary embodiment of the present invention.

Referring to FIG. 11, the work production progress module 300 of the virtual reality gallery system according to the exemplary embodiment of the present invention includes a production request receiving unit 310, a production request registering unit 320, a production matching unit 330, and a production progressing unit 340.

The production request receiving unit 310 receives a production request case from the third user terminal 40.

The production request registering unit 320 stores and manages at least one production request registration case including the production request case.

The production matching unit 330 transmits a production request list in accordance with the production request registration case to at least one of a plurality of registered user terminals, receives production request acceptance information including information about at least one production request acceptance case selected in the production request list from at least one fourth user terminal 22 which accepts the production request, among the plurality of user terminals 21, and performs a production matching process using the production request acceptance information.

The production matching unit 330 generates an accepted artist list according to the accepted artist terminal to transmit the list to the third user terminal 40, receives artist selection information including information about an matching artist who is an artist selected in the acceptance artist list from the third user terminal, and transmits a production matching completion message informing that the production matching is completed, to the third user terminal and a terminal of the matching artist using the artist selection information.

The production request acceptance information further includes artist suggestion information including suggestion for at least one work production other than the production request corresponding to the production request acceptance case. Here, the artist selection information further includes the production request corresponding to the production request acceptance case and production information selected from the suggestion for the work production.

The production progressing unit 340 progresses the work production process for the production request case matched by the production matching process.

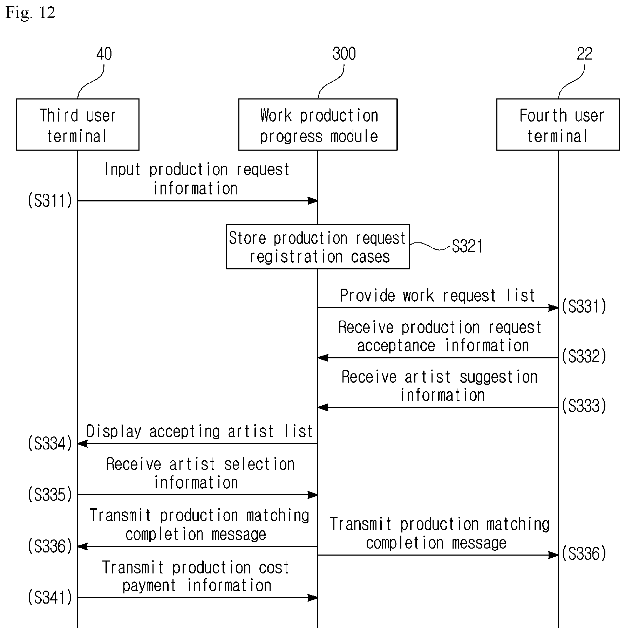

FIG. 12 is a flowchart for explaining a virtual reality gallery service providing method according to a work production progress module according to an exemplary embodiment of the present invention.

Referring to FIG. 12, the work production progress module 300 receives the work production request from the production request terminal which is the third user terminal 40 to perform the work production process.

First, when the production request terminal accesses the VR gallery service providing server 10 to be logged in, the VR gallery service providing server 10 begins the VR gallery service with the gallery executing terminal, for example, the user terminal C 40. At this time, in the production request terminal, a program for performing the VR gallery service, for example, an application program, needs to be downloaded to be installed in advance.

Next, when the user inputs production request information by clicking the work production request icon by means of the production request terminal to generate the production request case A, in step S311, the production request receiving unit 310 of the work production progress module 300 receives the production request case A from the production request terminal. At this time, the production request information included in the production request case A may include at least one of a digital image of a requested photograph to be produced or a request text including request contents of the work to be produced.

In the meantime, the production request information included in the production request case A may further include AI request information for an artificial intelligence preview service. As described above, when the production request receiving unit 310 receives the AI request information together with the digital image of the requested photograph, the digital image of the requested photograph is changed in accordance with the AI request information to immediately display the changed image in the production request terminal. For example, when the production request case A is a request for production of an artwork, the AI request information may include style information to change the digital image of the request photograph, such as a Gogh style or a Picasso style.

In step S321, the production request registering unit 320 of the work production progress module 300 stores and registers the production request case A. As a result, the production request registering unit 320 stores a plurality of production request cases including the production request case A as production request registration cases.

In step S331, the production matching unit 330 of the work production progress module 300 may transmit the production request list in accordance with the production request registration cases to registered artist terminals of a plurality of registered artists which is the fourth user terminals 22 at a predetermining timing or whenever a new production request case is registered. At this time, information about the registered artist terminals may be stored in the production matching unit 330 in advance.

In the meantime, according to the present exemplary embodiment, the production matching unit 330 may transmit a push message, an e-mail message, an SMS message to the registered artist terminal or post to a notice only when the registered artist terminals access the VR gallery service providing serer 10. However, even though the registered artist terminals do not access the VR gallery service providing server 10, the push message, the e-mail message, or the SMS message may be transmitted. As a result, each of the registered artists may easily identify the production request list through their own terminals. Here, in order to allow the registered artist terminals to receive the message from the VR gallery service providing server 10, a program to perform the VR gallery service, for example, an application program needs to be downloaded to be installed in advance.

In step S332, the production matching unit 330 receives production request acceptance information including information about at least one production request acceptance case selected in the production request list, from the acceptance artist terminal which is at least one user terminal among the registered artist terminals of the fourth user terminal 22. That is, when the acceptance artist terminal which is at least one of the registered artist terminals selects the production request acceptance case in the production request list by the input operation of the user, the production matching unit 340 may receive the production request acceptance information from the acceptance artist terminal.

Further, in step S333, the production matching unit 340 further receives artist suggestion information including suggestion for at least one work production, other than a production request corresponding to the production request acceptance case, such as a recommended work style or a type, from the production request acceptance information.

Next, the production matching unit 330 performs a production matching process using the production request acceptance information.

The process of performing the production matching process will be described in detail. In step S334, when the production request case A is included in the production request acceptance case, the production matching unit 330 may transmit the acceptance artist list according to the acceptance artist terminal to the production request terminal.

In step S335, when the user selects a matching artist in the acceptance artist list by the production request terminal, the production matching unit 330 may receive artist selectin information including information about the matching artist from the production request terminal. Here, the artist selection information may further include production information selected from the production request corresponding to the production request acceptance case and suggestion for the work production. As described above, when the artist suggestion information is included in the production request acceptance information, the user may request the production of the work with initially requested contents or suggested contents in accordance with the artist suggestion information.

In step S336, the production matching unit 330 may transmit a production matching completion message informing that the production matching is completed to the production request terminal and the user terminal of the matching artist using the artist selection information.

The production progressing unit 340 of the work production progress module 300 may progress the work production process for the production request case matched by the production matching process, for example, work production, work production completion, and work delivery. For example, after the user confirms the production matching completion message through the production request terminal, when the production cost payment information is generated to be transmitted to the production progressing unit 340 in step S341, the production progressing unit 340 accesses the payment server 60 using the production cost payment information to perform advanced payment or deferred payment and perform the work production process, simultaneously.

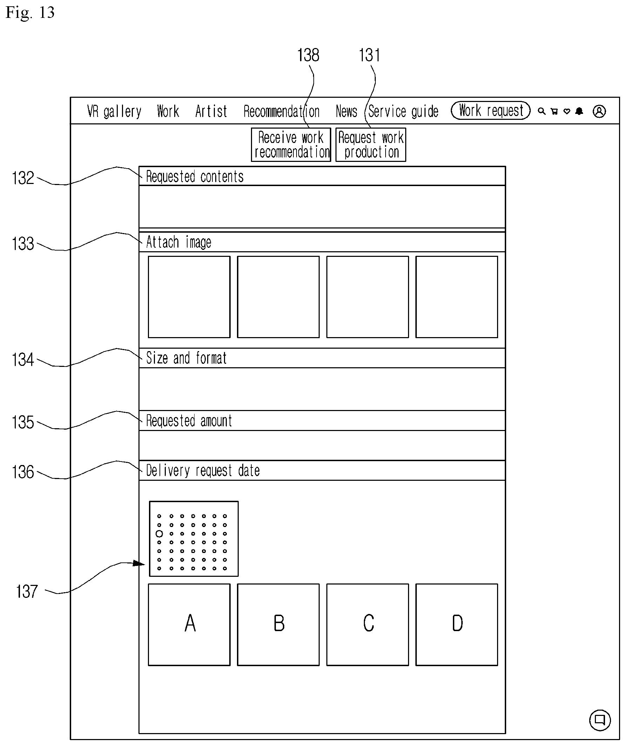

FIG. 13 is a screen illustrating an example of a work production progress process of a virtual reality gallery system according to an exemplary embodiment of the present invention.

Referring to FIG. 13, the user inputs the production request information 132 by clicking a work production request icon 131 through the production request terminal to generate the production request case A.

As the production request information, a digital image 133 of a request photograph to be produced may be attached and a size and a format may be set 134. Alternatively, at least one of request texts including request contents of the work to be produced may also be included.

Further, a requested amount 135 and a delivery request date 136 may be set and a work content list 137 may be disposed at a bottom of the screen of the terminal.

Further, after making a production request, the work may be recommended from the server by clicking a work recommendation receiving icon 138.

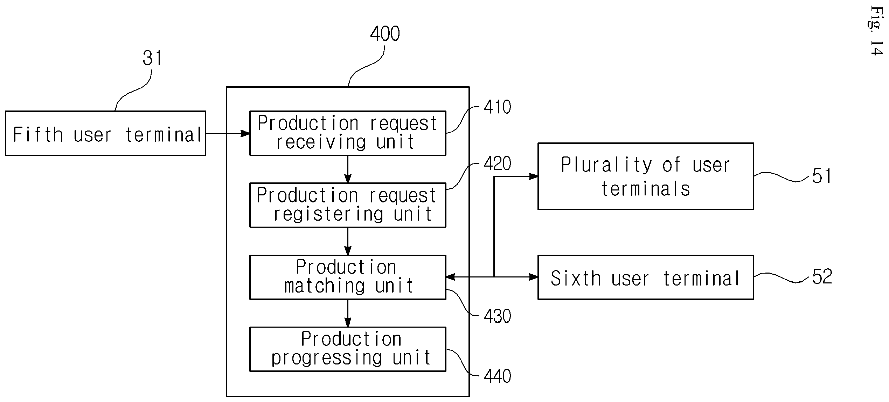

FIG. 14 is a block diagram illustrating a work purchase progress module of a virtual reality gallery system according to an exemplary embodiment of the present invention.

Referring to FIG. 14, the work purchase progress module 400 of the virtual reality gallery system according to the exemplary embodiment of the present invention includes a purchase request receiving unit 410, a purchase request registering unit 420, a purchase matching unit 430, and a purchase progressing unit 440.

The purchase request receiving unit 410 may receive the purchase request case B from the purchase request terminal corresponding to the fifth user terminal 31. At this time, the purchase request information included in the purchase request case B may include explanation for a work to be purchased or similar image information.

The purchase request registering unit 420 stores and registers the purchase request case B. As a result, the purchase request registering unit 420 stores a plurality of purchase request cases including the purchase request case B.

The purchase matching unit 430 transmits the purchase request list in accordance with the purchase request registration cases to registered conservator terminals 51 corresponding to user terminals of a plurality of registered conservators having a right to sell and manage at least one work at every predetermined timing or whether a new purchase request case is registered.

The purchase matching unit 430 receives purchase request acceptance information including information about at least one purchase request acceptance case selected in the purchase request list from the acceptance conservator terminal which is a sixth user terminal 52, among the registered conservator terminals.

The purchase progressing unit 440 progresses the work purchase process for the purchase request case matched by the purchase matching process, for example, purchased work delivery.

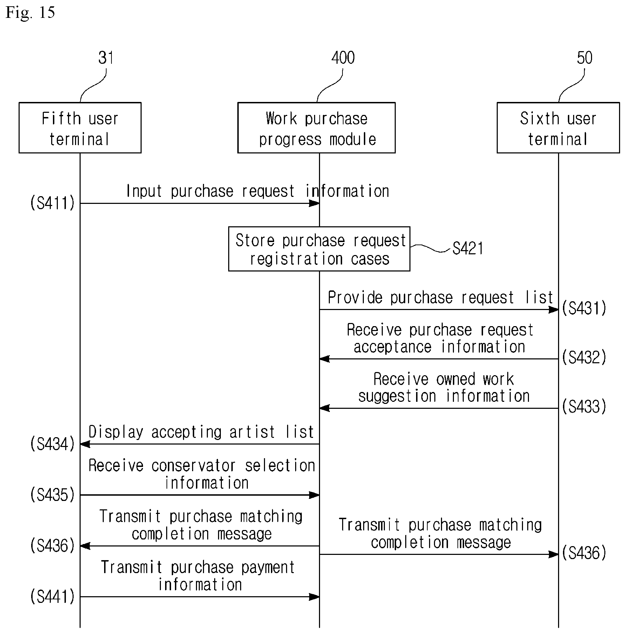

FIG. 15 is a flowchart for explaining a virtual reality gallery service providing method according to a work purchase progress module according to an exemplary embodiment of the present invention.

Referring to FIG. 15, the work purchase progress module 300 receives the work purchase request from the purchase request terminal corresponding to the fifth user terminal 31 to perform the work purchase process.

When the purchase request terminal accesses the VR gallery service providing server 10 to be logged in, the VR gallery service providing server 10 begins the VR gallery service with the user terminal B 30 which is a gallery executing terminal corresponding to the fifth user terminal 31. At this time, in the purchase request terminal, a program for performing the VR gallery service, for example, an application program, needs to be downloaded to be installed in advance.

In step S411, when the user generates the purchase request case B by inputting purchase request information while clicking the work purchase request icon by means of the purchase request terminal, the purchase request receiving unit 410 of the work purchase progress module 400 may receive the purchase request case B from the purchase request terminal. At this time, the purchase request information included in the purchase request case B may include explanation for a work to be purchased or similar image information.

In step S421, the purchase request registering unit 420 of the work purchase progress module 400 stores and registers the purchase request case B. As a result, the purchase request registering unit 420 stores a plurality of purchase request cases including the purchase request case B.

In step S431, the purchase matching unit 430 of the work purchase progress module 400 transmits the purchase request list in accordance with the purchase request registration cases to registered conservator terminals 50 corresponding to user terminals of a plurality of registered conservators having a right to sell and manage at least one work at every predetermined timing or whether a new purchase request case is registered. At this time, information about the registered conservator terminals may be stored in the purchase matching unit 430 in advance.

In the meantime, according to the present exemplary embodiment, the purchase matching unit 430 may transmit a push message, an e-mail message, an SMS message to the registered conservator terminal or post to a notice only when the registered conservator terminals access the VR gallery service providing serer 10. However, even though the registered conservator terminals do not access the VR gallery service providing server 10, the push message, the e-mail message, or the SMS message may be transmitted. As a result, each of the registered conservators may easily identify the purchase request list through their own terminals. Here, in order to allow the registered conservator terminals to receive the message from the VR gallery service providing server 10, a program to perform the VR gallery service, for example, an application program needs to be downloaded to be installed in advance.

In step S432, the purchase matching unit 430 may receive purchase request acceptance information including information about at least one purchase request acceptance case selected in the purchase request list, from the acceptance conservator terminal which is at least one user terminal among the registered conservator terminals. That is, when at least one acceptance conservator terminal among the registered conservator terminals selects the purchase request acceptance case in the purchase request list, the purchase matching unit 430 may receive the purchase request acceptance information from the acceptance manage terminal. For example, when there is a work corresponding to the purchase request case of the purchase request list among works which are managed by the conservator, the conservator of the corresponding work may select the purchase request case using its own user terminal to transmit the purchase request acceptance information to the purchase matching unit 430.

Further, in step S433, the conservator may further receive owned work suggestion information including at least one available work other than a work corresponding to the purchase request case, for example, a work to recommend, as the purchase request acceptance information.

Next, the purchase matching unit 430 performs a purchase matching process using the purchase request acceptance information.

The process of performing the purchase matching process will be described in detail. In step S434, when the purchase request case B is included in the purchase request acceptance case, the purchase matching unit 430 may transmit the acceptance conservator list according to the acceptance conservator terminal to the purchase request terminal.

In step S435, when the user selects a matching conservator which is any one conservator selected in the acceptance conservator list by means of the purchase request terminal, the purchase matching unit 430 may receive conservator selection information including information about the matching conservator from the purchase request terminal. Here, the conservator selection information may further include information about a work corresponding to the purchase request acceptance case and a work selected from the available works. As described above, when the owned work suggestion information is included in the purchase request acceptance information, the user may progress the purchase of the work which is initially requested by the user or purchase of the work in accordance with the owned work suggestion information.

In step S436, the purchase matching unit 430 may transmit a purchase matching completion message informing that the purchase matching is completed to the purchase request terminal and the user terminal of the matching conservator using the conservator selection information.

In step S441, the purchase progressing unit 440 of the work purchase progress module 400 may progress the work purchase process for the purchase request case matched by the purchase matching process, for example, the purchased work delivery. For example, after the user confirms the purchase matching completion message through the purchase request terminal, when the purchase payment information is generated to be transmitted to the purchase progressing unit 440, the purchase progressing unit 440 accesses the payment server 60 using the purchase payment information to make a payment and then or simultaneously perform the work purchase process.

As described above, according to the exemplary embodiment, a user who wants to exhibit user's own work uploads an original image of the corresponding work to the VR gallery service providing server 10, the VR gallery service providing server 10 generates a VR gallery to allow the original image of the uploaded work to be viewed in a virtual reality space so that a viewer who wants to view the work accesses the VR gallery service providing server 10 using the user terminal to view the corresponding work with a sense of realism by means of the VR gallery as if the viewer views the work at the actual gallery and may be connected to buy the work thereafter. That is, the viewer who wants to view may view the works in the virtual reality without directly visiting the actual gallery for free or with a reduced cost and when the viewer finds a work to purchase, the viewer may easily buy the corresponding work. Further, an artist who wants to exhibit his/her own work may create his/her own gallery for free or with a reduced cost to exhibit the works.

Further, when a user who wants to request the production of a work uploads information about the work which is wanted to be produced in the VR gallery service providing server 10, the VR gallery service providing server 10 contacts an artist who can produce the requested work to automatically match them so that the user may easily request the production of the work. Further, an artist who is registered in the VR gallery service providing server 10 may more easily match the requester who wants production of the work to perform the production of the work.

Further, when a user who wants to request purchase of a work uploads information about the work which is wanted to be purchased in the VR gallery service providing server 10, the VR gallery service providing server 10 contacts a conservator who can sell the corresponding requested work, for example, an owner or a curator, to automatically match them so that the user may easily request the purchase of the work. Further, a conservator who is registered in the VR gallery service providing server 10 may more easily match a purchasing place of the corresponding work to sell the work.

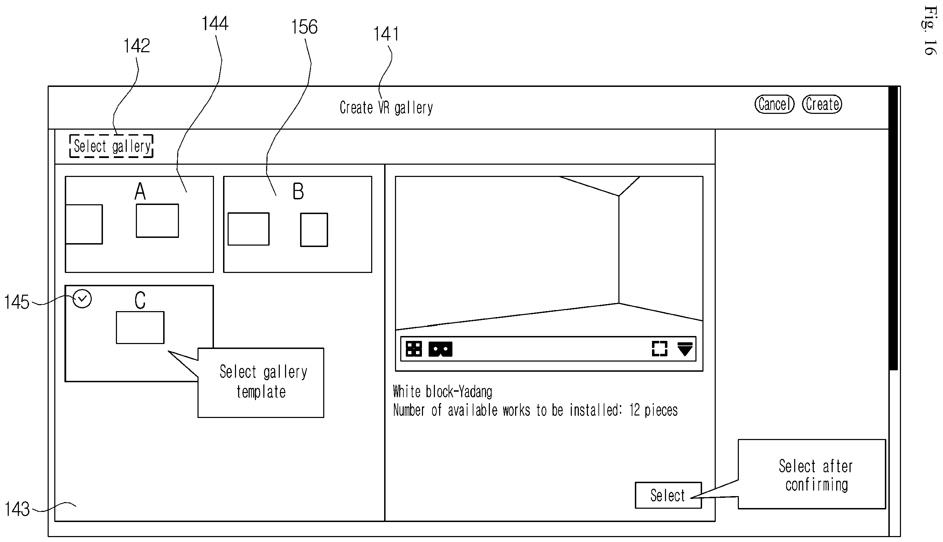

FIG. 16 is a screen illustrating an example of a process of selecting a gallery template of a virtual reality gallery system according to another exemplary embodiment of the present invention.

As illustrated in FIG. 16, the gallery generating terminal may display a template selection screen provided by the gallery generating unit 110.

The template selection screen 142 of the VR gallery making 141 screen may include a template selection region 143 in which a plurality of gallery templates A, B, and C which may be selected by the user is disposed in the form of a list, a template display region 146 in which a gallery template 145 selected from the gallery templates 144 displayed in the template selection region is displayed, a preview icon which displays the gallery template displayed in the template display region by a three-dimensional virtual reality, and a selection icon for selecting the gallery template displayed in the template display region. Accordingly, when the user selects one of the gallery templates displayed in the template selection region, the corresponding gallery template may be identified by the template display region and then when the preview icon is clicked, the three-dimensional virtual reality screen 147 of the corresponding gallery template may be identified in advance, and when the selection icon 148 is clicked, the corresponding template may be selected. As a result, the gallery generating terminal may generate the template selection information to transmit the template selection information to the gallery generating unit.

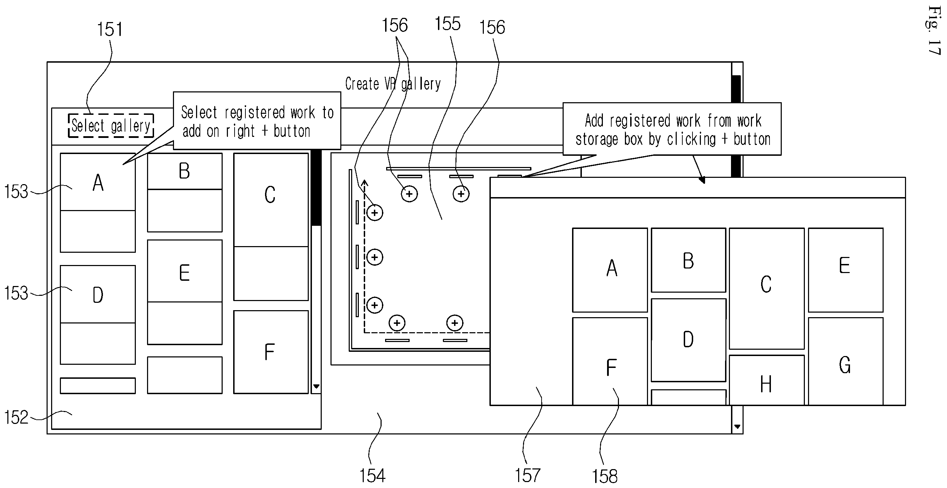

FIG. 17 is a screen illustrating an example of a process of setting a position of a work of a virtual reality gallery system according to an exemplary embodiment of the present invention.

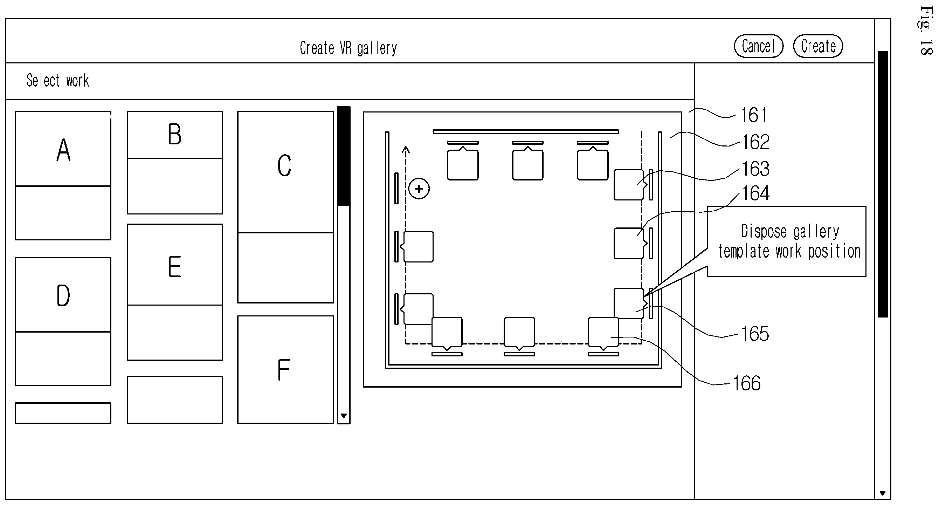

FIG. 18 is a screen illustrating an example of a state in which a work of a virtual reality gallery system according to an exemplary embodiment of the present invention is disposed in a set position.

As illustrated in FIG. 17, the gallery generating terminal may display a work position setting screen 151 in FIG. 17 provided by the gallery generating unit 110. At this time, the work position setting screen may include a work selection region 152 in which the plurality of work images 153 included in the work upload data is displayed in the form of a list and one of work images is selected by the user, the work placement region 154 in which the work image selected from the work selection region is disposed in one of the plurality of placement positions of the gallery template selected by the template selection information, and a background music selection region in which a plurality of music is displayed in the form of a list and one of the music is selected by the user to determine a background music to be used for the selected gallery template.

Accordingly, as illustrated in FIGS. 17 and 18, after selecting one of work images displayed in the work selection region, the user may dispose all the work images in their positions by selecting one of the placement positions 156 included in the space region 155 displayed in the work placement region.

Further, a registered work 158 is selected from a work storage box 157 to be added.

FIG. 18 illustrates a work placement region 161 in detail. Selected works to be disposed in the placement positions 163, 164, 165, and 166 may be displayed in a space region 162.

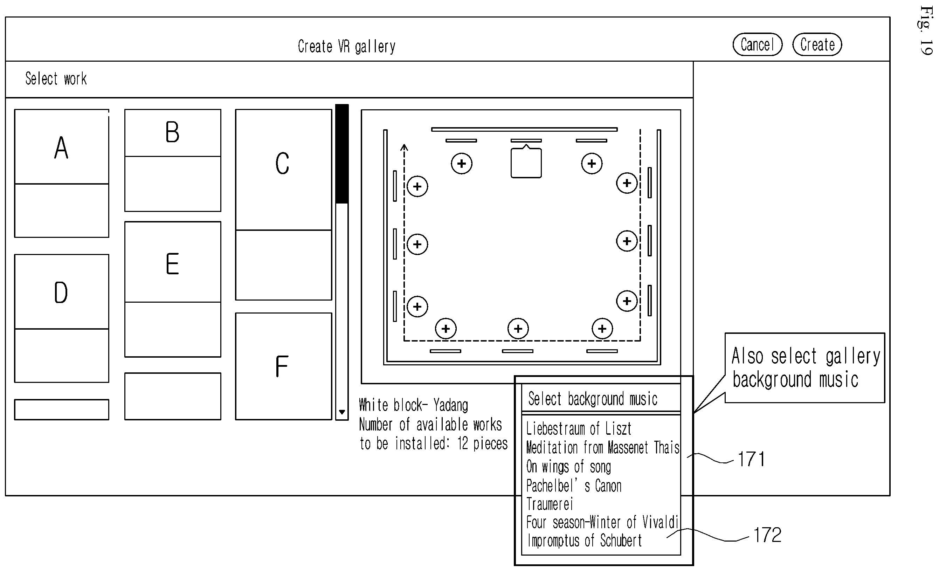

FIG. 19 is a screen illustrating an example of a process of selecting a gallery background music to be used for a gallery template of a virtual reality gallery system according to an exemplary embodiment of the present invention.

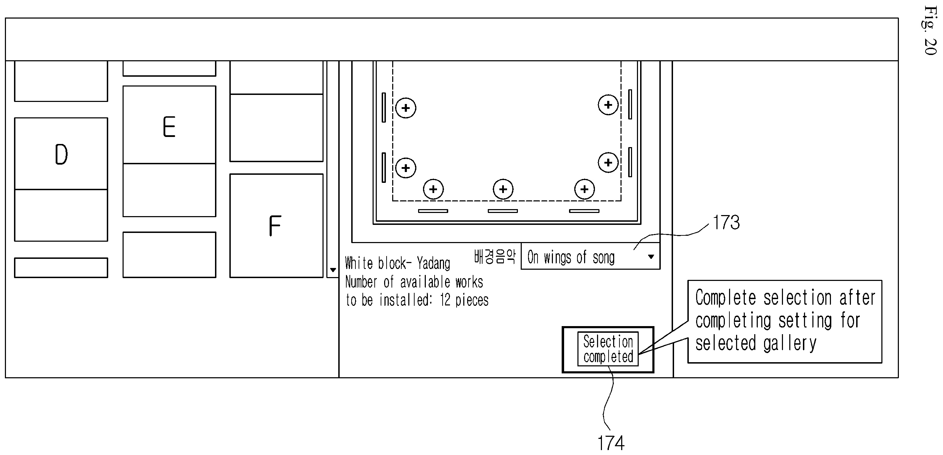

FIG. 20 is a screen illustrating an example of a process of completing a setting of a gallery template of a virtual reality gallery system according to an exemplary embodiment of the present invention.

After determining a background music 172 used for the selected gallery template by selecting one of music displayed in the background music selection region 171 as illustrated in FIG. 19, the setting for the selected gallery template may be completed by clicking the selection completion icon 174 as illustrated in FIG. 20. As a result, the gallery generating terminal may generate the work position setting information and the background music setting information to transmit the information to the gallery generating unit.

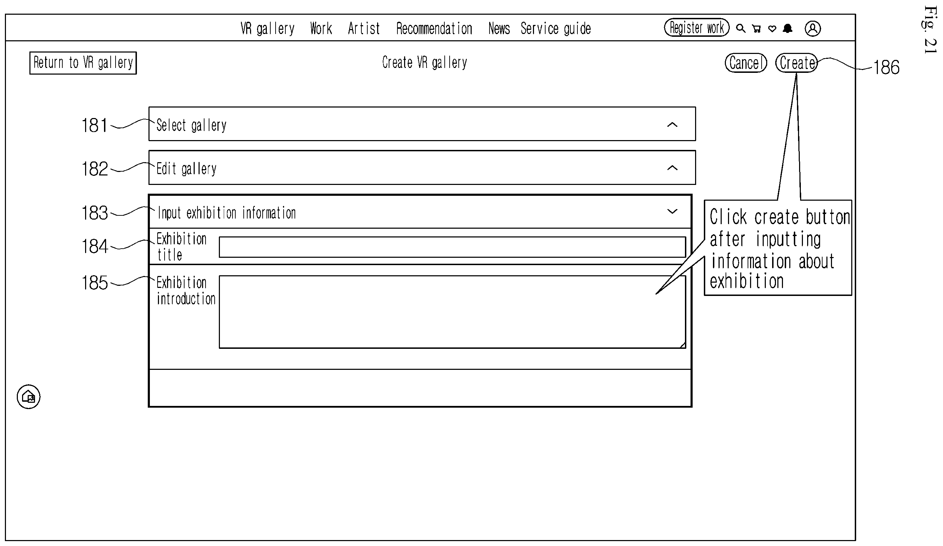

FIG. 21 is a screen illustrating an example of a process of inputting explanation for a VR gallery of a virtual reality gallery system according to an exemplary embodiment of the present invention.

When the gallery generating terminal displays a gallery explanation input screen provided by the gallery generating unit 110, after the user inputs the gallery explanation information through the gallery explanation input screen, the gallery explanation information may be transmitted to the gallery generating unit 110.

The information about the VR gallery includes the gallery selection information 181 and the work selection information 182 and information may be input in an exhibition information input 183 box.

As the exhibition information, an exhibition title 184 and an exhibition introduction 185 may be input.

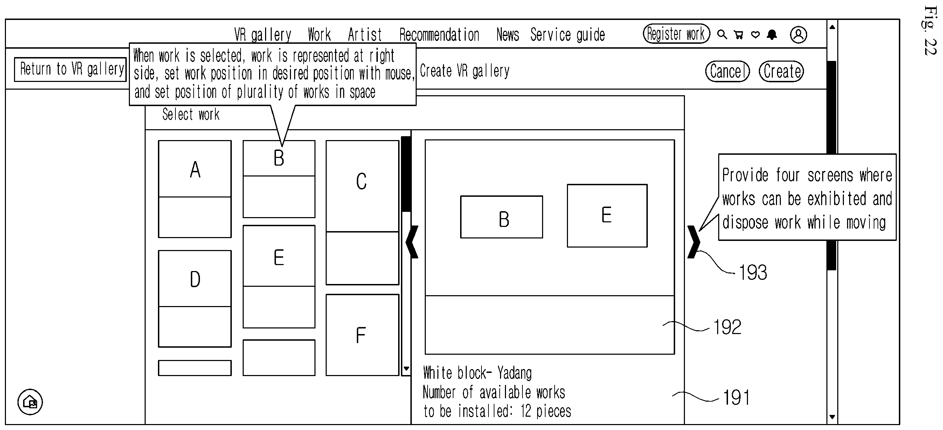

FIG. 22 is a screen illustrating another example of a process of setting a position of a work in a gallery template of a virtual reality gallery system according to another exemplary embodiment of the present invention.

Referring to FIG. 22, the work position setting information may include work selection information and work position selection information. The work selection information is information for determining at least one work to be disposed in the gallery template selected by the template selection information by the input operation of the user and the work position selection information is information for determining a placement position of the work selected by the work selection information by the input operation of the user.

The user selects one of work images displayed in the work selection region as illustrated in FIG. 22 by means of the gallery generating terminal to generate the work selection information. As described above, when one work among the work images is selected, the selected work may be disposed in a designated position or an arbitrary position of the work placement region 191 to be displayed. For example, the selected work may be displayed in an arbitrary position in a region where no other work is disposed, in the work placement region to be displayed. Thereafter, the user freely determines the placement position of the work displayed in the work placement region by means of the gallery generating terminal to a desired position by the input operation to generate the work position selection information.

In the meantime, the work placement region may display at least one screen of the plurality of screens for VR configuration and a screen selection icon to select at least one screen among the screens by the input operation of the user. For example, the screens may include a first screen corresponding to a front surface (a front wall) of the VR gallery, a second screen corresponding to a left surface (a left wall) of the VR gallery, a third screen corresponding to a right surface (a right wall) of the VR gallery, and a fourth screen corresponding to a rear surface (a rear wall) of the VR gallery.

Specifically, for example, after selecting a screen to be displayed in the work placement region among the screens while moving the screen to the left or right using the screen selection icon 193, the user changes a position 192 in which the selected work is displayed in the selected screen by the touch input operation to determine a desired position to generate the work position selection information. For example, it is assumed that the first screen is initially displayed in the work placement region. When the user clicks a left button of the screen selection icon, the first screen is changed to the second screen, when the left button is clicked again, the screen is changed to the fourth screen, when the left button is clicked again, the screen is changed to the third screen, and when the left button is clicked again, the screen returns to the first screen. In contrast, when the user clicks a left button of the screen selection icon, the first screen is changed to the third screen, when the user clicks the right button again, the screen is changed to the fourth screen, when the user clicks the right button again, the screen is changed to the second screen, and when the user clicks the right button again, the screen returns to the first screen. That is, the work position selection information may include screen selection information for determining at least one screen to be displayed in the work placement region among the screens, by the input operation of the user and position determination information for determining a placement position of the selected work in the screen selected by the screen selection information by the input operation of the user.

The above description is just an example of the present invention and those skilled in the art may modify the present invention without departing from an essential characteristic of the present invention. Accordingly, the scope of the present invention is not limited to the above-described embodiment, but should be construed to include various embodiments within the scope equivalent to the description of the claims.

## Claims

1. A virtual reality gallery system, comprising:
a first user terminal; and
a VR gallery service providing server including a processor configured to control work upload data including at least one original image to be received from the first user terminal and a virtual reality (VR) gallery for online viewing of the original image to be generated using the work upload data.

2. The virtual reality gallery system of claim 1, wherein the VR gallery service providing server includes:
a VR gallery generation module which receives work upload data including at least one original image from the first user terminal to generate a virtual reality (VR) gallery for online viewing of the original image using work contents included in the work upload data and a space image selected as a space desired by a user to exhibit the work corresponding to the original image and store and manage the generated VR gallery as a registered gallery; and
a VR gallery execution module which selects any one VR gallery which is stored as the registered gallery to be managed as a selected gallery to transmit the selected gallery to a second user terminal.

3. The virtual reality gallery system of claim 2, wherein the VR gallery generation module includes:
a gallery generating unit which generates a virtual reality (VR) gallery for online viewing of the original image using the work upload data; and
a gallery registering unit which stores the VR gallery as a registered gallery to be managed.

4. The virtual reality gallery system of claim 2, wherein the VR gallery execution module includes:
a gallery executing unit which selects any one VR gallery which is stored as the registered gallery to be managed as a selected gallery to transmit the selected gallery to a second user terminal; and
a work purchasing unit which receives work purchase information to buy a selected work which is at least one work included in the selected gallery from the second user terminal and performs a purchase process of the selected work in accordance with the work purchase information.

5. The virtual reality gallery system of claim 1, wherein the work upload data includes one or more selected from a group consisting of work bibliographic information including an artist name of the original image, work explanation information for explaining the original image, right holder information including an owner of the original image, and purchase price information including a purchase price for the original image.

6. The virtual reality gallery system of claim 5, wherein the work explanation information includes one or more selected from a group consisting of explanation text information, explanation audio file, and explanation video file information.

7. The virtual reality gallery system of claim 3, wherein the gallery generating unit further receives gallery setting information for the VR gallery from the first user terminal and generates the VR gallery using the work upload data and the gallery setting information and the gallery setting information includes template selection information for determining one of at least one gallery template to determine a gallery style.

8. The virtual reality gallery system of claim 4, wherein the gallery executing unit transmits a gallery list for at least one gallery included in the registered gallery to the second user terminal, receives information about the selected gallery from the second user terminal, and transmits the selected gallery to the second user terminal to be displayed and the selected gallery is a VR gallery selected by the second user terminal in the gallery list.

9. The virtual reality gallery system of claim 1, wherein the VR gallery service providing server includes:
a work production progress module which receives a work production request from the third user terminal which requests the production of the work to performs a work production process.

10. The virtual reality gallery system of claim 9, wherein the work production progress module includes:
a production request receiving unit which receives a production request case from the third user terminal;
a production request registering unit which stores and manages at least one production request registration case including the production request case;
a production matching unit which transmits a production request list in accordance with the production request registration case to at least one of a plurality of registered user terminals, receives production request acceptance information including information about at least one production request acceptance case selected in the production request list from at least one fourth user terminal which accepts the production request, among the plurality of user terminals, and performs a production matching process using the production request acceptance information; and
a production progressing unit which progresses the work production process for a production request case matched by the production matching process.

11. The virtual reality gallery system of claim 10, wherein the production matching unit generates an accepted artist list according to the accepted artist terminal to transmit the list to the third user terminal, receives artist selection information including information about an matching artist who is an artist selected in the acceptance artist list from the third user terminal, and transmits a production matching completion message informing that the production matching is completed, to the third user terminal and a terminal of the matching artist using the artist selection information.

12. A virtual reality gallery service providing method, comprising:
receiving work upload data including at least one original image from a first user terminal, by a VR gallery service providing server;
generating a virtual reality (VR) gallery for online viewing of the original image using work contents included in the work upload data and a space image selected as a space desired by a user to exhibit a work corresponding to the original image; and
storing and managing the VR gallery as a registered gallery.

13. The virtual reality gallery service providing method of claim 12, further comprising:
selecting any one VR gallery which is stored as the registered gallery to be managed as a selected gallery to transmit the selected gallery to a second user terminal, by the VR gallery service providing server; and
receiving work purchase information to buy a selected work which is at least one work included in the selected gallery from the second user terminal and performing a purchase process of the selected work in accordance with the work purchase information.

14. The virtual reality gallery service providing method of claim 12, wherein the generating of a virtual reality (VR) gallery for online viewing of the original image using the work upload data is receiving gallery setting information for the VR gallery from the first user terminal and generating the VR gallery using the work upload data and the gallery setting information.

15. The virtual reality gallery service providing method of claim 13, wherein the selecting of the VR gallery as a selected gallery to transmit to the second user terminal is transmitting a gallery list for at least one gallery included in the registered gallery to the second user terminal, receiving information about the selected gallery from the second user terminal, and transmitting the selected gallery to the second user terminal to be displayed.
